# EUROPÄISCHE PATENTSCHRIFT

(11) **EP 3 123 603 B1**
(45) Veröffentlichungstag und Bekanntmachung des Hinweises auf die Patenterteilung: **07.06.2023**
(21) Anmeldenummer: 15703032.1
(22) Anmeldetag: 29.01.2015
(51) Int. Cl.: H02M 3/335

(54) **MODULATIONSVERFAHREN FÜR DEN HOCHSETZSTELLER-BETRIEB EINES GEGENTAKTWANDLERS**
MODULATION METHOD FOR THE BOOST CONVERTER OPERATING MODE OF A PUSH-PULL CONVERTER
PROCÉDÉ DE MODULATION DU FONCTIONNEMENT EN MODE ÉLÉVATEUR D'UN CONVERTISSEUR PUSH-PULL

(30) Priorität: 26.03.2014 DE 102014205652
(43) Veröffentlichungstag der Anmeldung: 01.02.2017
(73) Patentinhaber: Robert Bosch GmbH, 70442 Stuttgart (DE)
(72) Erfinder: TASTEKIN, David, 70178 Stuttgart (DE)
(86) Internationale Anmeldenummer: PCT/EP2015/051789
(87) Internationale Veröffentlichungsnummer: WO 2015/144338

(56) Entgegenhaltungen:
- DE-A1-102012 111 063
- US-A1- 2006 132 062
- US-A1- 2010 142 228
- US-A1- 2012 092 896
- US-A1- 2013 322 128
- JIH-SHENG LAI ET AL: "Energy Management Power Converters in Hybrid Electric and Fuel Cell Vehicles", PROCEEDINGS OF THE IEEE, IEEE. NEW YORK, US, Bd. 95, Nr. 4, 1. April 2007 (2007-04-01), Seiten 766-777, XP011180090, ISSN: 0018-9219, DOI: 10.1109/JPROC.2006.890122
- YEN-SHIN LAI ET AL: "Current sensing methods for standby power control of digital-controlled DC/DC converter", POWER ELECTRONICS AND ECCE ASIA (ICPE&ECCE), 2011 IEEE 8TH INTERNATIONAL CONFERENCE ON, IEEE, 30. Mai 2011 (2011-05-30), Seiten 1742-1748, XP031956072, DOI: 10.1109/ICPE.2011.5944476 ISBN: 978-1-61284-958-4
- WANG K ET AL: "Bi-directional DC to DC converters for fuel cell systems", POWER ELECTRONICS IN TRANSPORTATION, 1998 DEARBORN, MI, USA 22-23 OCT. 1998, NEW YORK, NY, USA,IEEE, US, 22. Oktober 1998 (1998-10-22), Seiten 47-51, XP010313443, DOI: 10.1109/PET.1998.731056 ISBN: 978-0-7803-4398-6

## Beschreibung

Die Erfindung betrifft ein Verfahren zur Modulation des Hochsetzsteller-Betriebs eines Gegentaktwandlers. Insbesondere betrifft die Erfindung ein Verfahren zur Modulation des Hochsetzsteller-Betriebs eines bidirektionalen Gegentaktwandlers.

### Stand der Technik

Obwohl die vorliegende Erfindung und die ihr zugrundeliegende Problematik anhand eines bidirektionalen Gegentaktwandlers erläutert wird, ist sie auch auf beliebige andere Gegentaktwandler anwendbar, bei denen ein Hochsetzsteller-Betrieb vorgesehen ist.

Bidirektionale Gleichspannungswandler finden typischerweise dort Anwendung, wo elektrische Energie in zwei Richtungen übertragen werden soll. So sind diese nützlich, um in Hybridelektrofahrzeugen Energie von einem Hochvoltznetz in ein Niedervoltznetz und umgekehrt zu übertragen. Beispielsweise kann mit Hilfe eines Gleichspannungswandlers im Tiefsetzsteller-Betrieb eine Batterie bei 12 V aufgeladen werden, wogegen der Hochsetzsteller-Betrieb bedarfsweise zum Aufladen bzw. zum Betrieb eines Hilfsenergiespeichersystems für den kurzfristigen Leistungsbedarf (zum Beispiel beim Startvorgang) bei mehreren hundert Volt genutzt werden kann. Je nach Anwendungsgebiet wird für den Gleichspannungswandler eine galvanische Trennung zwischen Hoch- und Niedervoltseite gefordert, so dass es mitunter vorteilhaft ist, den Gleichspannungswandler als Gegentaktwandler auszuführen.

Die Druckschrift US 2010/142228 A1 offenbart einen bidirektionalen DC-DC-Wandler mit einem Transformator für Step-Down- und Step-Up-Betrieb. Eine Schaltfrequenz für den Betrieb wird separat für die Step-Down- und Step-up-Operationen eingestellt.

Die Druckschrift US 2012/092896 A1 betrifft ein Schaltnetzteil, das eine Eingangsspannung durch einen Schaltvorgang in eine gepulste Spannung umwandelt und diese gepulste Spannung gleichmäßig ausgibt, um eine Gleichstromspannung auszugeben.

Die Druckschrift US 2006/132062 A1 offenbart eine Stromerfassungsschaltung, die Ausgangsströme eines Schaltnetzteils erfasst, um eine Ausgangsstromrichtung zu detektieren.

Die Druckschrift Nene H., "Digital Control of a Bi-Directional DC-DC Converter for Automotive Applications", Applied Power Electronics Conference and Exposition (APEC), Long Beach (CA), USA, 17-21 March, 2013 (doi: 10.1109/APEC.2013.6520476) beschreibt einen bidirektionalen Gegentaktwandler, welcher hochvoltseitig mit einer Vollbrückenschaltung und niedervoltseitig mit Mittelpunktabgriff ausgeführt ist. Weiterhin ist hochvoltseitig eine Stromsensorvorrichtung vorgesehen, welche zur Messung des Stroms durch den Transformator ausgebildet ist. Im Tiefsetzsteller-Betrieb wird als Modulationsverfahren zum Ansteuern des Gegentaktwandlers das so genannte Phase-Shifted-Verfahren verwendet. Im Hochsetzsteller-Betrieb kommt ein Verfahren zur Anwendung, bei welchem hochvoltseitig phasenweise kein Strom fließt.

Für den geregelten Hochsetzsteller-Betrieb bedarf es bisher einer zusätzlichen Stromsensorvorrichtung in der niedervoltseitigen Schaltung. Dies macht eine aufwendige Ausgestaltung der niedervoltseitigen Schaltung notwendig.

### Offenbarung der Erfindung

Die vorliegende Erfindung schafft ein Verfahren zur Modulation des Hochsetzsteller-Betriebs eines Gegentaktwandlers mit einer niedervoltseitigen Schaltung, welche dazu ausgelegt ist, eine niedervoltseitige anliegende Gleichspannung in eine niedervoltseitige Wechselspannung umzusetzen, mit einer ersten niedervoltseitigen Schalteinrichtung, einer zweiten niedervoltseitigen Schalteinrichtung und einer Drossel; mit einem Transformator mit einer niedervoltseitigen Wicklung und einer hochvoltseitigen Wicklung, welcher dazu ausgelegt ist, die niedervoltseitige Wechselspannung an der niedervoltseitigen Wicklung zu empfangen und eine hochvoltseitige Wechselspannung an der hochvoltseitigen Wicklung zu erzeugen; und mit einer hochvoltseitigen Schaltung, welche als Vollbrückengleichrichter ausgelegt ist, um die hochvoltseitige Wechselspannung in eine hochvoltseitige Gleichspannung umzusetzen, mit einem ersten und einem zweiten Gleichrichtungselement, welche eine erste Halbbrücke bilden, und einem dritten und einem vierten Gleichrichtungselement, welche eine zweite Halbbrücke bilden; wobei zumindest das erste oder das vierte Gleichrichtungselement als Schalteinrichtung ausgebildet ist und wobei zumindest das zweite oder das dritte Gleichrichtungselement als Schalteinrichtung ausgebildet ist; wobei das Verfahren die Schritte umfasst, des Schließens der ersten niedervoltseitigen Schalteinrichtung und des Öffnens der zweiten niedervoltseitigen Schalteinrichtung zum Erzeugen einer ersten Spannung am Transformator und zum Einspeisen von Energie in den Transformator und die Drossel bei gleichzeitigem Kurzschließen der hochvoltseitigen Wicklung über das erste oder das vierte Gleichrichtungselement während eines ersten Zeitabschnitts eines Modulationszyklus; des Öffnens des für das Kurzschließen der hochvoltseitigen Wicklung verwendeten Gleichrichtungselements zum Erzeugen einer hochvoltseitigen Gleichspannung während eines zweiten Zeitabschnitts des Modulationszyklus; des Öffnens der ersten niedervoltseitigen Schalteinrichtung und Schließen der zweiten niedervoltseitigen Schalteinrichtung zum Erzeugen einer zweiten Spannung am Transformator, welche entgegengesetzt zur ersten Spannung gepolt ist, bei gleichzeitigem Kurzschließen der hochvoltseitigen Wicklung über das zweite oder das dritte Gleichrichtungselement der zweiten Halbbrücke während eines dritten Zeitabschnitts des Modulationszyklus; und des Öffnens des für das Kurzschließen der hochvoltseitigen Wicklung verwendeten Gleichrichtungselements zum Erzeugen einer hochvoltseitigen Gleichspannung während eines vierten Zeitabschnitts des Modulationszyklus.

### Vorteile der Erfindung

Es ist eine Idee der vorliegenden Erfindung, ein Verfahren zur Modulation des Hochsetzsteller-Betriebs eines Gegentaktwandlers zu schaffen, welches einen geregelten Betrieb möglich macht, ohne dass niedervoltseitig eine Stromsensorvorrichtung notwendig ist. Die Strommessung geschieht hierbei durch eine sich auf der Hochvoltseite befindende Stromsensorvorrichtung. Das Verfahren nutzt hierzu im Hochsetzsteller-Betrieb zusätzlich Schalteinrichtungen auf der Hochvoltseite, um den Leistungsfluss bzw. den Strom zu steuern. Sowohl durch die hochvoltseitige Windung, als auch durch die niedervoltseitige Windung des Transformators fließt jederzeit ein Strom, so dass dieser jederzeit durch eine einzelne Stromsensorvorrichtung auf der Hochvoltseite gemessen bzw. geregelt werden kann. Ein erheblicher Vorteil der erfindungsgemäßen Lösung besteht darin, dass herkömmliche Gegentaktwandler im Hochsetzsteller-Betrieb geregelt betrieben werden können, ohne dass eine zusätzliche Stromsensorvorrichtung aufwendig auf der Niedervoltseite eingebaut werden muss.

Gemäß einer bevorzugten Weiterbildung kann die niedervoltseitige Schaltung als Mittelpunktschaltung aus der ersten niedervoltseitigen und der zweiten niedervoltseitigen Schalteinrichtung sowie der Drossel ausgebildet sein. Diese Weiterbildung der niedervoltseitigen Schaltung ist eine einfache Umsetzung einer Schaltungsanordnung, welche zum Ansteuern eines Gegentaktwandlers im Hochsetzsteller-Betrieb nutzbar ist.

Gemäß einer alternativen bevorzugten Weiterbildung kann die niedervoltseitige Schaltung weiterhin eine dritte niedervoltseitige Schalteinrichtung und eine vierte niedervoltseitige Schalteinrichtung umfassen. Ferner kann die niedervoltseitige Schaltung als Vollbrückenschaltung aus der ersten niedervoltseitigen, der zweiten niedervoltseitigen, der dritten niedervoltseitigen und der vierten niedervoltseitigen Schalteinrichtung sowie der Drossel ausgebildet sein. Zudem kann sowohl das Öffnen und das Schließen der ersten niedervoltseitigen Schalteinrichtung jeweils von einem gleichzeitigen Öffnen und Schließen der vierten niedervoltseitigen Schalteinrichtung begleitet werden, als auch das Öffnen und das Schließen der zweiten niedervoltseitigen Schalteinrichtung jeweils von einem gleichzeitigen Öffnen und Schließen der dritten niedervoltseitigen Schalteinrichtung begleitet werden. Diese Weiterbildung der niedervoltseitigen Schaltung ist eine alternative Umsetzung einer Schaltungsanordnung, welche zum Ansteuern eines Gegentaktwandlers im Hochsetzsteller-Betrieb nutzbar ist.

Vorzugsweise können die niedervoltseitigen und hochvoltseitigen Schalteinrichtungen MOSFETs (Metall-Oxid-Halbleiter-Feldeffekttransistoren), IGBTs (Bipolartransistoren mit isolierter Gate-Elektrode), JFETs (Sperrschicht-Feldeffekttransistoren) und/oder BJTs (Bipolartransistoren)bzw. andere geeignete Halbleiterschalter umfassen. Die Schalteinrichtung enthält somit vorteilhafterweise aktiv schaltbare Halbleiterkomponenten, wie sie in miniaturisierter Form in großer Anzahl in einem einzelnen Halbleitersubstrat integrierbar sind.

Ferner können die niedervoltseitigen und/oder die hochvoltseitigen Schalteinrichtungen vorzugsweise als Synchrongleichrichter ausgebildet sein. Synchrongleichrichter stellen eine einfache Möglichkeit zur Gleichrichtung dar, beispielsweise sind so keine zusätzlichen Dioden notwendig.

Gemäß einer bevorzugten Weiterbildung kann den niedervoltseitigen und hochvoltseitigen Schalteinrichtungen jeweils eine Diode anti-parallel geschaltet sein. In dieser Weiterbildung können die Dioden zur Gleichrichtung genutzt werden und die Schalteinrichtungen müssen nicht als Synchrongleichrichter ausgebildet sein.

Gemäß einer bevorzugten Weiterbildung können die hochvoltseitigen Gleichrichtungselemente als Schalteinrichtungen ausgebildet sein. Ferner können in aufeinanderfolgenden Modulationszyklen im ersten Zeitabschnitt das erste sowie das vierte Gleichrichtungselement und im dritten Zeitabschnitt das dritte sowie das zweite Gleichrichtungselement jeweils abwechselnd zum Kurzschließen der hochvoltseitigen Wicklung verwendet werden. Dies hat den Vorteil, dass Verluste pro Schalteinrichtung reduzierbar sind und zudem die Lebensdauer der Schaltreinrichtungen erhöht wird.

### Kurze Beschreibung der Zeichnungen

Weitere Merkmale und Vorteile der vorliegenden Erfindung werden nachfolgend anhand von Ausführungsformen mit Bezug auf die Figuren erläutert.

Es zeigen:
- Fig. 1: eine schematische Darstellung eines beispielhaften bidirektionalen Gegentaktwandlers;
- Fig. 2a: ein zeitliches Verlaufsdiagramm von Ansteuersignalen eines beispielhaften Verfahrens zur Modulation des Hochsetzsteller-Betriebs eines bidirektionalen Gegentaktwandlers;
- Fig. 2b: ein zeitliches Verlaufsdiagramm von Ansteuersignalen eines Verfahrens zur Modulation des Hochsetzsteller-Betriebs eines bidirektionalen Gegentaktwandlers gemäß einer Ausführungsform der Erfindung;
- Fig. 3: eine schematische Darstellung eines weiteren beispielhaften bidirektionalen Gegentaktwandlers;
- Fig. 4: ein zeitliches Verlaufsdiagramm von Ansteuersignalen eines Verfahrens zur Modulation des Hochsetzsteller-Betriebs eines bidirektionalen Gegentaktwandlers gemäß einer weiteren Ausführungsform der Erfindung.

### Ausführungsformen der Erfindung

In den Figuren bezeichnen gleiche Bezugszeichen gleiche bzw. funktionsgleiche Elemente.

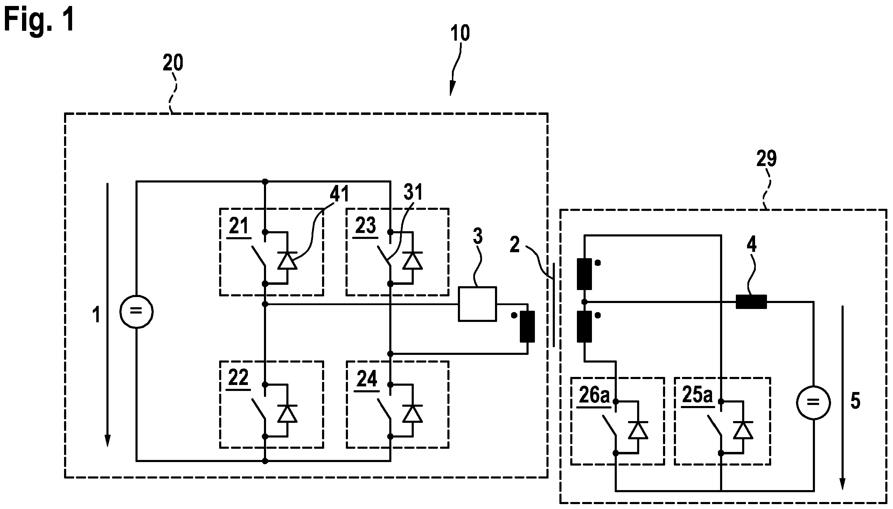

Fig. 1 zeigt eine schematische Darstellung eines beispielhaften bidirektionalen Gegentaktwandlers.

In Fig. 1 bezeichnet das Bezugszeichen 10 den Gegentaktwandler. Dabei ist in einer hochvoltseitigen Schaltung 20 eine Vollbrückenschaltung aus Schalteinrichtungen 21, 22, 23, 24 realisiert. Eine niedervoltseitige Schaltung 29 ist als Mittelpunktschaltung aus Schalteinrichtungen 25a, 26a sowie einer Drossel 4 ausgeführt. Weiterhin sind die hochvoltseitige Schaltung 20 und die niedervoltseitige Schaltung 29 über einen Transformator 2 galvanisch isolierend miteinander verbunden. Innerhalb der hochvoltseitigen Schaltung 20 befindet sich eine Stromsensorvorrichtung 3, welche zur Messung des Stroms durch den Transformator 2 ausgebildet ist. Die Schalteinrichtungen 21, 22, 23, 24, 25a, 26a umfassen jeweils einen Transistor 31 und eine Diode 41. An der hochvoltseitigen Schaltung 20 ist eine Gleichspannung 1 anlegbar bzw. abgreifbar und auf der Niedervoltseite entsprechend eine Gleichspannung 5.

Im Tiefsetzsteller-Betrieb kann die hochvoltseitige Schaltung 20 aufbauend auf dem Phase-Shifted-Verfahren durch entsprechend getaktetes Schalten der Transistoren 31 der Schalteinrichtungen 21, 22, 23, 24 eine hochvoltseitig anliegende Gleichspannung 1 über den Transformator 2 an die niedervoltseitige Schaltung 29 weitergeben, welche ihrerseits darauf aufbauend eine niedervoltseitige Gleichspannung 5 bereitstellt. In dieser Ausführung dienen die Dioden der niedervoltseitigen Schaltung 29 als Mittelpunktgleichrichter.

Im Hochsetzsteller-Betrieb kann ein Verfahren zur Anwendung kommen, bei welchem auf der Hochvoltseite phasenweise kein Strom fließt. Hierbei werden lediglich die Transistoren 31 der Schalteinrichtungen 25a, 26a der niedervoltseitigen Schaltung 29 geschaltet (Parallelspeisung des Gegentaktwandlers 10) während in der hochvoltseitigen Schaltung 20 die Dioden 41 der Schalteinrichtungen 21, 22, 23, 24 als Brückengleichrichter Verwendung finden. Für einen geregelten Hochsetzsteller-Betrieb des in Fig. 1 gezeigten Gegentaktwandlers 10 bedarf es aber eines Verfahrens bzw. einer Schaltungsanordnung bei der der Strom jederzeit auswertbar ist, so dass der Gegentaktwandler 10 entsprechend regelbar ist. Ein Lösungsansatz wäre der Einbau einer Stromsensorvorrichtung 3 in die niedervoltseitige Schaltung 29. Dies würde eine aufwendige Ausgestaltung der niedervoltseitigen Schaltung notwendig machen.

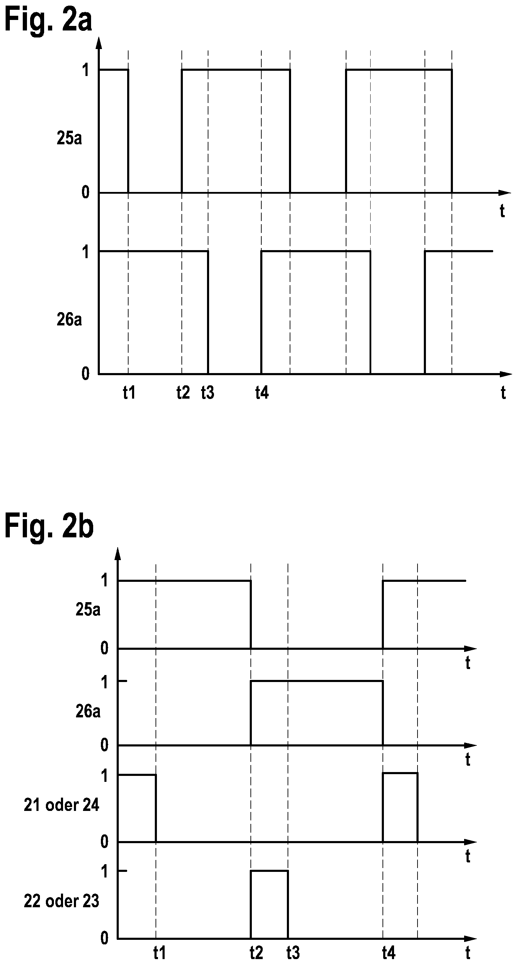

Fig. 2a zeigt ein zeitliches Verlaufsdiagramm von Ansteuersignalen eines beispielhaften Verfahrens zur Modulation des Hochsetzsteller-Betriebs eines bidirektionalen Gegentaktwandlers.

Das in Fig. 2a abgebildete Modulationsverfahren dient zur Ansteuerung des in Fig. 1 gezeigten Gegentaktwandlers 10 im Hochsetzsteller-Betrieb. Hierbei werden die Transistoren 31 der Schalteinrichtungen 25a, 26a der niedervoltseitigen Schaltung 29 zur Parallelspeisung des Gegentaktwandlers 10 geschaltet. In der hochvoltseitigen Schaltung 20 werden die Dioden 41 der Schalteinrichtungen 21, 22, 23, 24 als Brückengleichrichter verwendet. Die Transistoren 31 der hochvoltseitigen Schalteinrichtungen 21, 22, 23, 24 werden bei diesem Verfahren nicht geschaltet. In Fig. 2a sind die Schaltzustände der Schalteinrichtungen 25a, 26a als Funktion der Zeit dargestellt. Die beiden Schalteinrichtungen 25a, 26a werden um 180° phasenverschoben zueinander ein- und ausgeschaltet. In Phasen, in denen eine der Schalteinrichtungen 25a, 26a geöffnet ist, wird Energie in die hochvoltseitige Gleichspannungsquelle gespeist und dort ein Strom induziert, gleichzeitig wird eine niedervoltseitig anliegende Gleichspannung 5 in eine hochvoltseitige Gleichspannung 1 transformiert. In einem ersten Zeitabschnitt [0,t1] eines Modulationszyklus sind beide Schalteinrichtungen 25a, 26a für den Stromaufbau gleichzeitig geschlossen und es wird Energie in die Drossel 4 und den Transformator 2 eingespeist. In diesem Zeitabschnitt ist der Strom auf der Hochvoltseite gleich Null ist. In einem zweiten Zeitabschnitt [t1,t2] eines Modulationszyklus ist Schalteinrichtung 25a geöffnet, während Schalteinrichtung 26a weiterhin geschlossen ist. In einem dritten Zeitabschnitt [t2,t3] sind wieder beide Schalteinrichtungen 25a, 26a geschlossen. In einem vierten Zeitabschnitt [t3,t4] bleibt die Schalteinrichtung 25a weiterhin geschlossen, während nun die Schalteinrichtung 26a geöffnet ist. Phasenweise fließt somit kein Strom auf der Hochvoltseite.

Fig. 2b zeigt ein zeitliches Verlaufsdiagramm von Ansteuersignalen eines Verfahrens zur Modulation des Hochsetzsteller-Betriebs eines bidirektionalen Gegentaktwandlers gemäß einer Ausführungsform der Erfindung.

Auch das in Fig. 2b abgebildete Modulationsverfahren dient zur Ansteuerung des in Fig. 1 gezeigten Gegentaktwandlers 10 im Hochsetzsteller-Betrieb. Im Unterschied zu dem Modulationsverfahren in Fig. 2a fließt aber bei diesem jederzeit ein Strom auf der Hochvoltseite. Wie in Fig. 2a werden auch hier die Transistoren 31 der Schalteinrichtungen 25a, 26a der niedervoltseitigen Schaltung 29 zur Parallelspeisung des Gegentaktwandlers 10 geschaltet. Zudem werden auch hier die Dioden 41 der Schalteinrichtungen 21, 22, 23, 24 in der hochvoltseitigen Schaltung 20 als Brückengleichrichter verwendet. Zusätzlich wird in dem in Fig. 2b abgebildeten Verfahren allerdings auch jeweils einer der Transistoren 31 der hochvoltseitigen Schalteinrichtungen 21, 22, 23, 24 geschaltet. In einem ersten Zeitabschnitt [0,t1] eines Modulationszyklus ist Schalteinrichtung 25a geschlossen, während Schalteinrichtung 26a geöffnet ist. Hierdurch wird eine erste Spannung am Transformator 2 bereitgestellt und Energie in diesen sowie in die Drossel 4 gespeist. Gleichzeitig ist in diesem ersten Zeitabschnitt [0,t1] einer der beiden Transistoren 31 des ersten hochvoltseitigen Paars aus diagonal angeordneten Schalteinrichtungen 21, 24 geschlossen. Hierdurch wird die hochvoltseitige Wicklung des Transformators 2 kurzgeschlossen, so dass keine Gleichspannung 1 an der hochvoltseitigen Schaltung 20 erzeugt wird. Nichtsdestotrotz wird ein Strom in der hochvoltseitige Schaltung 20 induziert, welcher unter anderem durch die Stromsensorvorrichtung 3 fließt und dort messbar ist. In einem zweiten Zeitabschnitt [t1,t2] eines Modulationszyklus bleibt Schalteinrichtung 25a weiterhin geöffnet und Schalteinrichtung 26a weiterhin geschlossen, während die im ersten Zeitabschnitt [0,t1] geschlossene Schalteinrichtung 21, 24 der hochvoltseitigen Schaltung 20 wieder geöffnet wird. Die hochvoltseitige Wicklung des Transformators 2 ist nun nicht mehr kurzgeschlossen, so dass Energie in die hochvoltseitige Gleichspannungsquelle gespeist wird, ein Strom auf der Hochvoltseite induziert wird und gleichzeitig eine niedervoltseitig anliegende Gleichspannung 5 in eine hochvoltseitige Gleichspannung 1 transformiert wird. In einem dritten Zeitabschnitt [t2,t3] wird die Schalteinrichtung 25a geöffnet und die Schalteinrichtung 26a geschlossen. Gleichzeitig wird eine der beiden Schalteinrichtungen 22, 23 des zweiten hochvoltseitigen Paars aus diagonal angeordneten Schalteinrichtungen geschlossen. Ähnlich wie im ersten Zeitabschnitt [0,t1] wird auch hier wieder die hochvoltseitige Wicklung des Transformators 2 kurzgeschlossen, so das ein Strom durch die hochvoltseitige Wicklung und die Stromsensorvorrichtung 3 fließt, ohne dass eine hochvoltseitige Gleichspannung entsteht. In einem vierten Zeitabschnitt [t3,t4] wird die zuvor geschlossene Schalteinrichtung 22, 23 der Hochvoltseite wieder geöffnet, während die niedervoltseitigen Schalteinrichtungen 25a, 26a ihren Zustand beibehalten.

Welche der hochvoltseitigen Schalteinrichtungen jeweils im ersten [0,t1] bzw. dritten [t2,t3] Zeitabschnitt geschlossen wird, ist hierbei willkürlich. Beispielsweise kann im ersten Zeitabschnitt entweder Schalteinrichtung 21 oder aber Schalteinrichtung 24 geschlossen werden. Es ist eine Ausführungsform des Verfahrens vorgesehen, bei der die beiden Schalteinrichtungen 21, 24 in aufeinanderfolgenden Modulationszyklen abwechselnd geschaltet werden. Dies hat den Vorteil, dass Verluste pro Schalter reduziert werden können und die Lebensdauer der Schalter erhöht werden kann.

Die Anwendung des erfindungsgemäßen Verfahrens auf den Gegentaktwandler 10 in Fig. 1 ist beispielhaft zu sehen. Weiterhin ist die in Fig. 2b dargestellte Ausführungsform des Verfahrens beispielhaft. Das Verfahren kann unter anderem auch auf andere Ausführungen von Gegentaktwandlern 10 angewendet werden. Beispielweise ist eine Ausführung eines Gegentaktwandlers 10 vorgesehen, bei dem keine Dioden 41 zum Einsatz kommen, sondern die Transistoren 31 als Synchrongleichrichter angesteuert werden. Die technische Ausführung der Transistoren in Fig. 1 wurde nicht näher spezifiziert. Prinzipiell sind Ausführungen als MOSFETs (Metall-Oxid-Halbleiter-Feldeffekttransistoren), IGBTs (Bipolartransistoren mit isolierter Gate-Elektrode), JFETs (Sperrschicht-Feldeffekttransistors) und/oder BJTs (Bipolartransistoren) vorgesehen, wobei allerdings auch andere geeignete Technologien für Halbleiterschalter verwendet werden können.

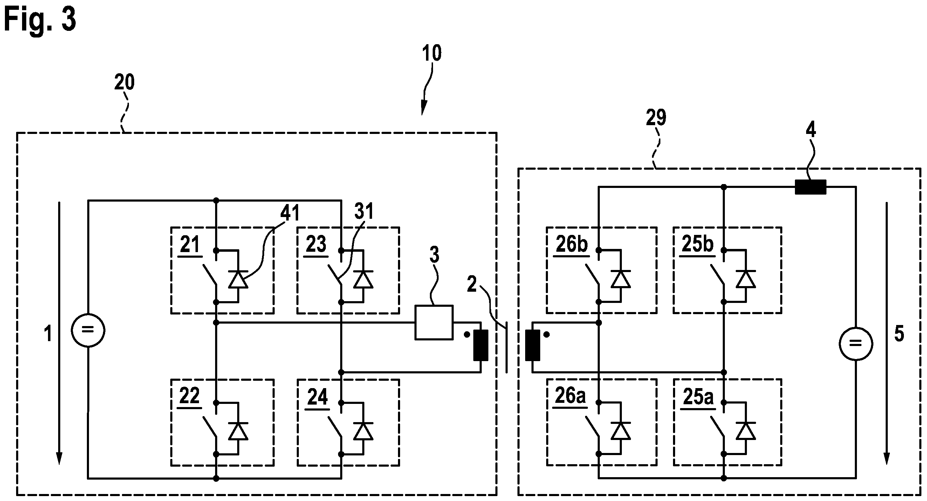

Fig. 3 zeigt eine schematische Darstellung eines weiteren beispielhaften bidirektionalen Gegentaktwandlers.

Prinzipiell ist der Aufbau und die Funktionsweise des in Fig. 3 abgebildeten Gegentaktwandlers 10 ähnlich zu jenem in Fig. 1. Im Gegensatz zu dem Gegentaktwandler 10 in Fig. 1 ist allerdings bei dem in Fig. 3 auch die niedervoltseitige Schaltung 29 als Vollbrückenschaltung realisiert. Diese besteht aus Schalteinrichtungen 25a, 26a, 25b, 26b sowie einer Drossel 4. Alle Schalteinrichtungen bestehen jeweils aus einem Transistor 31 und einer Diode 41. An der hochvoltseitigen Schaltung 20 ist eine Gleichspannung 1 anlegbar bzw. abgreifbar und auf der Niedervoltseite entsprechend eine Gleichspannung 5. Im Tiefsetzsteller-Betrieb dienen die Dioden 41 der niedervoltseitigen Schaltung hier als Brückengleichrichter, im Hochsetzsteller-Betrieb jene der hochvoltseitigen Schaltung. Im Hochsetzsteller-Betrieb wie im Tiefsetzsteller-Betrieb wird der Gegentaktwandler jeweils mit Vollbrückenansteuerung betrieben. Im Hochsetzsteller-Betrieb finden aber auch die Transistoren 31 der hochvoltseitigen Schaltung 20 Verwendung zum Kurzschließen der hochvoltseitigen Wicklung des Transformators 2.

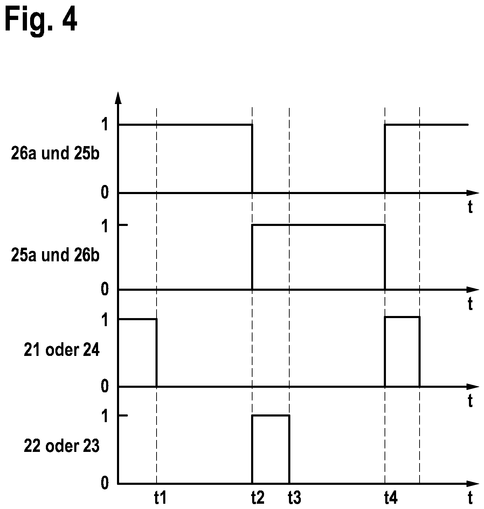

Fig. 4 zeigt ein zeitliches Verlaufsdiagramm von Ansteuersignalen eines Verfahrens zur Modulation des Hochsetzsteller-Betriebs eines bidirektionalen Gegentaktwandlers gemäß einer weiteren Ausführungsform der Erfindung.

In Fig. 4 wird beispielhaft ein Verfahren dargestellt, wie es zum Betrieb des Gegentaktwandlers aus Fig. 3 als Hochsetzsteller nutzbar ist. Prinzipiell ist das Verfahren sehr ähnlich zu jenem aus Fig. 2b mit dem Unterschied, dass die niedervoltseitige Schaltung 29 entsprechend einer Vollbrücke angesteuert wird. In einem Zeitabschnitt eines Modulationszyklus werden dementsprechend diagonal angeordnete Schalteinrichtungen der niedervoltseitigen Schaltung 29 geschlossen bzw. geöffnet. Beispielsweise werden in einem ersten Zeitabschnitt [0,t1] eines Modulationszyklus Schalteinrichtungen 26a und 25b geschlossen, während Schalteinrichtungen 25a und 26b geöffnet bleiben. Genau wie im Verfahren in Fig. 2b wird im ersten Zeitabschnitt [0,t1] entweder Schalteinrichtung 21 oder 24 geschlossen und im zweiten Zeitabschnitt wieder geöffnet. So wird auch in dieser Ausführungsform der Erfindung sichergestellt, dass jederzeit ein Strom durch die Stromsensorvorrichtung 3 auf der Hochvoltseite fließt und so keine zusätzliche Stromsensorvorrichtung auf der Niedervoltseite notwendig ist.

## Patentansprüche

1. Verfahren zur Modulation des Hochsetzsteller-Betriebs eines Gegentaktwandlers (10) mit
einer niedervoltseitigen Schaltung (29), welche dazu ausgelegt ist, eine niedervoltseitige anliegende Gleichspannung (5) in eine niedervoltseitige Wechselspannung umzusetzen, mit einer ersten niedervoltseitigen Schalteinrichtung (25a), einer zweiten niedervoltseitigen Schalteinrichtung (26a) und einer Drossel (4);
einem Transformator (2) mit einer niedervoltseitigen Wicklung und einer hochvoltseitigen Wicklung, welcher dazu ausgelegt ist, die niedervoltseitige Wechselspannung an der niedervoltseitigen Wicklung zu empfangen und eine hochvoltseitige Wechselspannung an der hochvoltseitigen Wicklung zu erzeugen; und
einer hochvoltseitigen Schaltung (20), welche als Vollbrückengleichrichter ausgelegt ist, um die hochvoltseitige Wechselspannung in eine hochvoltseitige Gleichspannung (1) umzusetzen, mit einem ersten (21) und einem zweiten Gleichrichtungselement (22), welche eine erste Halbbrücke bilden, und einem dritten (23) und einem vierten Gleichrichtungselement (24), welche eine zweite Halbbrücke bilden;
wobei zumindest das erste (21) oder das vierte Gleichrichtungselement (24) als Schalteinrichtung ausgebildet ist und wobei zumindest das zweite (22) oder das dritte Gleichrichtungselement (23) als Schalteinrichtung ausgebildet ist;
wobei das Verfahren die Schritte umfasst:
Schließen der ersten niedervoltseitigen Schalteinrichtung (25a) und Öffnen der zweiten niedervoltseitigen Schalteinrichtung (26a) zum Erzeugen einer ersten Spannung am Transformator (2) und zum Einspeisen von Energie in den Transformator (2) und die Drossel (4) bei gleichzeitigem Kurzschließen der hochvoltseitigen Wicklung über das erste (21) oder das vierte Gleichrichtungselement (24) während eines ersten Zeitabschnitts ([0,t1]) eines Modulationszyklus;
Öffnen des für das Kurzschließen der hochvoltseitigen Wicklung verwendeten Gleichrichtungselements (21, 24) zum Erzeugen einer hochvoltseitigen Gleichspannung (1) während eines zweiten Zeitabschnitts ([t1,t2]) des Modulationszyklus;
Öffnen der ersten niedervoltseitigen Schalteinrichtung (25a) und Schließen der zweiten niedervoltseitigen Schalteinrichtung (26a) zum Erzeugen einer zweiten Spannung am Transformator (2), welche entgegengesetzt zur ersten Spannung gepolt ist, bei gleichzeitigem Kurzschließen der hochvoltseitigen Wicklung über das zweite (22) oder das dritte Gleichrichtungselement (23) der zweiten Halbbrücke während eines dritten Zeitabschnitts ([t2,t3]) des Modulationszyklus; und
Öffnen des für das Kurzschließen der hochvoltseitigen Wicklung verwendeten Gleichrichtungselements (22, 23) zum Erzeugen einer hochvoltseitigen Gleichspannung (1) während eines vierten Zeitabschnitts ([t3,t4]) des Modulationszyklus.

2. Verfahren nach Anspruch 1,
wobei die niedervoltseitige Schaltung (29) als Mittelpunktschaltung aus der ersten niedervoltseitigen (25a) und der zweiten niedervoltseitigen Schalteinrichtung (26a) sowie der Drossel (4) ausgebildet ist.

3. Verfahren nach Anspruch 1,
wobei die niedervoltseitige Schaltung (29) weiterhin eine dritte niedervoltseitige Schalteinrichtung (25b) und eine vierte niedervoltseitige Schalteinrichtung (26b) umfasst und als Vollbrückenschaltung aus der ersten niedervoltseitigen (25a), der zweiten niedervoltseitigen (26a), der dritten niedervoltseitigen (25b) und der vierten niedervoltseitigen Schalteinrichtung (26b) sowie der Drossel (4) ausgebildet ist; und
sowohl das Öffnen und das Schließen der ersten niedervoltseitigen Schalteinrichtung (25a) jeweils von einem gleichzeitigen Öffnen und Schließen der vierten niedervoltseitigen Schalteinrichtung (26b) begleitet wird, als auch das Öffnen und das Schließen der zweiten niedervoltseitigen Schalteinrichtung (26a) jeweils von einem gleichzeitigen Öffnen und Schließen der dritten niedervoltseitigen Schalteinrichtung (25b) begleitet wird.

4. Verfahren nach einem der Ansprüche 1 bis 3,
wobei die niedervoltseitigen und hochvoltseitigen Schalteinrichtungen (21, 22, 23, 24, 25a, 25b, 26a, 26b) MOSFETs (31), IGBTs (31), JFETs (31) und/oder BJTs (31) umfassen.

5. Verfahren nach Anspruch 4,
wobei die niedervoltseitigen und/oder die hochvoltseitigen Schalteinrichtungen (21, 22, 23, 24, 25a, 25b, 26a, 26b) als Synchrongleichrichter ausgebildet sind.

6. Verfahren nach einem der Ansprüche 1 bis 5,
wobei bei den niedervoltseitigen und/oder hochvoltseitigen Schalteinrichtungen (21, 22, 23, 24, 25a, 25b, 26a, 26b) jeweils eine antiparallele Diode (41) vorhanden ist.

7. Verfahren nach einem der Ansprüche 1 bis 6,
wobei die hochvoltseitigen Gleichrichtungselemente (21, 22, 23, 24) als Schalteinrichtungen ausgebildet sind und wobei in aufeinanderfolgenden Modulationszyklen im ersten Zeitabschnitt ([0,t1]) das erste (21) sowie das vierte Gleichrichtungselement (24) und im dritten Zeitabschnitt ([t2,t3]) das zweite (22) sowie das dritte Gleichrichtungselement (23) jeweils abwechselnd zum Kurzschließen der hochvoltseitigen Wicklung verwendet werden.

## Claims

1. Method for modulating the boost converter operating mode of a push-pull converter (10) having a low-voltage-side circuit (29), designed to convert a low-voltage-side applied DC voltage (5) into a low-voltage-side AC voltage, having a first low-voltage-side switching device (25a), a second low-voltage-side switching device (26a) and an inductor (4);
a transformer (2) having a low-voltage-side winding and a high-voltage-side winding, designed to receive the low-voltage-side AC voltage on the low-voltage-side winding and to produce a high-voltage-side AC voltage on the high-voltage-side winding; and
a high-voltage-side circuit (20), designed as a full-bridge rectifier, in order to convert the high-voltage-side AC voltage into a high-voltage-side DC voltage (1), having a first (21) and a second (22) rectification element, which form a first half-bridge, and a third (23) and a fourth (24) rectification element, which form a second half-bridge;
wherein at least the first (21) or the fourth (24) rectification element is in the form of a switching device and wherein at least the second (22) or the third (23) rectification element is in the form of a switching device;
the method comprising the steps of:
closing the first low-voltage-side switching device (25a) and opening the second low-voltage-side switching device (26a) to produce a first voltage across the transformer (2) and to supply energy to the transformer (2) and the inductor (4) while simultaneously shorting the high-voltage-side winding via the first (21) or the fourth (24) rectification element during a first time period ([0,t1]) of a modulation cycle;
opening the rectification element (21, 24) used for shorting the high-voltage-side winding to produce a high-voltage-side DC voltage (1) during a second time period ([t1,t2]) of the modulation cycle;
opening the first low-voltage-side switching device (25a) and closing the second low-voltage-side switching device (26a) to produce a second voltage across the transformer (2), which has the opposite polarity to the first voltage, while simultaneously shorting the high-voltage-side winding via the second (22) or the third (23) rectification element of the second half-bridge during a third time period ([t2,t3]) of the modulation cycle; and
opening the rectification element (22, 23) used for shorting the high-voltage-side winding to produce a high-voltage-side DC voltage (1) during a fourth time period ([t3,t4]) of the modulation cycle.

2. Method according to Claim 1,
wherein the low-voltage-side circuit (29) is in the form of a mid-point connection comprising the first low-voltage-side (25a) and the second low-voltage-side (26a) switching device and the inductor (4).

3. Method according to Claim 1,
wherein the low-voltage-side circuit (29) additionally comprises a third low-voltage-side switching device (25b) and a fourth low-voltage-side switching device (26b) and is in the form of a full-bridge circuit comprising the first low-voltage-side (25a), the second low-voltage-side (26a), the third low-voltage-side (25b) and the fourth low-voltage-side (26b) switching device and the inductor (4); and
the opening and closing of the first low-voltage-side switching device (25a) is accompanied in each case by simultaneous opening and closing of the fourth low-voltage-side switching device (26b) and the opening and closing of the second low-voltage-side switching device (26a) is accompanied in each case by simultaneous opening and closing of the third low-voltage-side switching device (25b).

4. Method according to one of Claims 1 to 3,
wherein the low-voltage-side and high-voltage-side switching devices (21, 22, 23, 24, 25a, 25b, 26a, 26b) comprise MOSFETs (31), IGBTs (31), JFETs (31) and/or BJTs (31).

5. Method according to Claim 4,
wherein the low-voltage-side and/or the high-voltage-side switching devices (21, 22, 23, 24, 25a, 25b, 26a, 26b) are in the form of synchronous rectifiers.

6. Method according to one of Claims 1 to 5,
wherein an antiparallel diode (41) is present for each of the low-voltage-side and/or high-voltage-side switching devices (21, 22, 23, 24, 25a, 25b, 26a, 26b).

7. Method according to one of Claims 1 to 6,
wherein the high-voltage-side rectification elements (21, 22, 23, 24) are in the form of switching devices and wherein in the first time period ([0,t1]) the first (21) and the fourth (24) rectification element and in the third time period ([t2,t3]) the second (22) and the third (23) rectification element are in each case alternately used to short the high-voltage-side winding in successive modulation cycles.

## Revendications

1. Procédé de modulation du fonctionnement en mode élévateur d'un convertisseur push-pull (10), comprenant un circuit côté basse tension (29), lequel est conçu pour convertir une tension continue (5) appliquée du côté basse tension en une tension alternative côté basse tension, comprenant un premier dispositif de commutation (25a) côté basse tension, un deuxième dispositif de commutation (26a) côté basse tension et une bobine de choc (4) ;
un transformateur (2) pourvu d'un enroulement côté basse tension et d'un enroulement côté haute tension, lequel est conçu pour recevoir la tension alternative côté basse tension au niveau de l'enroulement côté basse tension et générer une tension alternative côté haute tension au niveau de l'enroulement côté haute tension ; et
un circuit côté haute tension (20), lequel est conçu sous la forme d'un redresseur en pont intégral afin de convertir la tension alternative côté haute tension en une tension continue côté haute tension (1), comprenant un premier (21) et un deuxième élément de redressement (22), lesquels forment un premier demi-pont, ainsi qu'un troisième (23) et un quatrième élément de redressement (24), lesquels forment un deuxième demi-pont ;
au moins le premier (21) ou le quatrième élément de redressement (24) étant réalisé sous la forme d'un dispositif de commutation et au moins le deuxième (22) ou le troisième élément de redressement (23) étant réalisé sous la forme d'un dispositif de commutation ;
le procédé comprenant les étapes suivantes :
fermeture du premier dispositif de commutation (25a) côté basse tension et ouverture du deuxième dispositif de commutation (26a) côté basse tension en vue de générer une première tension au niveau du transformateur (2) et pour injecter de l'énergie dans le transformateur (2) et la bobine de choc (4) en court-circuitant simultanément l'enroulement côté haute tension par le biais du premier (21) ou du quatrième élément de redressement (24) pendant un premier intervalle de temps ([0,t1]) d'un cycle de modulation ;
ouverture de l'élément de redressement (21, 24) utilisé pour court-circuiter l'enroulement côté haute tension en vue de générer une tension continue côté haute tension (1) pendant un deuxième intervalle de temps ([t1,t2]) du cycle de modulation ;
ouverture du premier dispositif de commutation (25a) côté basse tension et fermeture du deuxième dispositif de commutation (26a) côté basse tension en vue de générer une deuxième tension au niveau du transformateur (2), laquelle est polarisée à l'inverse de la première tension, en court-circuitant simultanément l'enroulement côté haute tension par le biais du deuxième (22) ou du troisième élément de redressement (23) du deuxième demi-pont pendant un troisième intervalle de temps ([t2,t3]) du cycle de modulation ; et
ouverture de l'élément de redressement (22, 23) utilisé pour court-circuiter l'enroulement côté haute tension en vue de générer une tension continue côté haute tension (1) pendant un quatrième intervalle de temps ([t3,t4]) du cycle de modulation.

2. Procédé selon la revendication 1, le circuit côté basse tension (29) étant réalisé sous la forme d'une prise médiane composée du premier dispositif de commutation côté basse tension (25a) et du deuxième dispositif de commutation côté basse tension (26a) ainsi que de la bobine de choc (4).

3. Procédé selon la revendication 1,
le circuit côté basse tension (29) comportant en outre un troisième dispositif de commutation côté basse tension (25b) et un quatrième dispositif de commutation côté basse tension (26b) et étant réalisé sous la forme d'un circuit en pont intégral composé du premier dispositif de commutation côté basse tension (25a), du deuxième dispositif de commutation côté basse tension (26a), du troisième dispositif de commutation côté basse tension (25b) et du quatrième dispositif de commutation côté basse tension (26b) ainsi que de la bobine de choc (4) ; et
aussi bien l'ouverture que la fermeture du premier dispositif de commutation côté basse tension (25a) étant respectivement accompagnées d'une ouverture ou d'une fermeture simultanée du quatrième dispositif de commutation côté basse tension (26b), tout comme l'ouverture ainsi que la fermeture du deuxième dispositif de commutation côté basse tension (26a) étant respectivement accompagnées d'une ouverture ou d'une fermeture simultanée du troisième dispositif de commutation côté basse tension (25b).

4. Procédé selon l'une des revendications 1 à 3, les dispositifs de commutation côté basse tension et côté haute tension (21, 22, 23, 24, 25a, 25b, 26a, 26b) comprenant des MOSFET (31), des IGBT (31), des JFET (31) et/ou des BJT (31).

5. Procédé selon la revendication 4, les dispositifs de commutation côté basse tension et/ou les dispositifs de commutation côté haute tension (21, 22, 23, 24, 25a, 25b, 26a, 26b) étant réalisés sous la forme de redresseurs synchrones.

6. Procédé selon l'une des revendications 1 à 5, une diode en tête-bêche (41) étant respectivement présente au niveau des dispositifs de commutation côté basse tension et/ou côté haute tension (21, 22, 23, 24, 25a, 25b, 26a, 26b).

7. Procédé selon l'une des revendications 1 à 6, les éléments de redressement côté haute tension (21, 22, 23, 24) étant réalisés sous la forme d'éléments de commutation et, dans des cycles de modulation séquentiels, le premier (21) ainsi que le quatrième élément de redressement (24) étant utilisés dans le premier intervalle de temps ([0,t1]) et le deuxième (22) ainsi que le troisième élément de redressement (22, 23) dans le troisième intervalle de temps ([t2,t3]), respectivement en alternance pour court-circuiter l'enroulement côté haute tension.
